# EUROPEAN PATENT SPECIFICATION

(11) **EP 1 676 979 B1**
(45) Date of publication and mention of the grant of the patent: **25.09.2013**
(21) Application number: 05257847.3
(22) Date of filing: 20.12.2005
(51) Int. Cl.: F01D 15/10, F02C 7/268, F02C 6/00, H02P 9/42

(54) **Turbogenerator**
Turbogenerator
Turbo-générateur

(30) Priority: 23.12.2004 IT MI20042487
(43) Date of publication of application: 05.07.2006
(73) Proprietor: Nuovo Pignone S.p.A., 50127 Florence (IT)
(72) Inventor: Frosini, Guido, 50143 Firenze (IT); Mercer, Gary David, Simpsonville, South Carolina 29681 (US); Chiari, Simone, 59015 Carmignani (Prato) (IT)
(74) Representative: Bedford, Grant Richard

(56) References cited:
- JP-A- 58 212 367
- US-A- 5 694 026
- US-A1- 2003 037 548

## Description

The present invention relates to a turbogenerator which can be used in particular in a thermo-electric plant for the generation of electric power.

A turbogenerator normally comprises a gas turbine for the generation of mechanical energy, and an electric generator or alternator for converting the mechanical energy into electric power.

The electric power obtained directly from mechanical energy is typically electric power in alternate current obtained by means of an alternator.

On the basis of the rotation of an outlet shaft of the turbine, an alternate electric current is thus obtained, whose frequency depends directly on the number of revs per minute of the turbine shaft.

In other words, the higher the rotation rate of the turbine shaft, the higher the frequency will be of the electric current obtained by the shaft.

US 5 694 026 discloses a gas turbine coupled to an alternator. The alternator is in series with a static frequency converter which is connected to the grid via a transformer and a line circuit breaker. The static frequency converter also has the function of regulating and/or exciting the alternator.

US 2003/0037548 discloses a gas storage power station with two turbines driving a generator via a common turbine shaft. The gas storage power station has a power consumption device which has a static frequency converter. The power consumption device has a control and/or regulating device.

Gas turbines having small and medium capacities only have a high efficiency under functioning conditions in which the rotation rate of the shaft, expressed in revs per minute is high, and typically ranges from 5,000 to 20,000 revs/minute.

This means that by transforming the mechanical energy of the shaft, an alternate electric current would be obtained at a high frequency and consequently not compatible with that of the electric systems commonly used.

Electric systems do in fact have alternate currents at a frequency of 50 Hz or 60 Hz depending on the national standards used.

In order therefore to be able to have an electric power at the typical frequency of an electric system of 50 Hz, it is necessary to have a low rotation rate, for example ranging from 3,000 to 1,500 revs/minute respectively in the case of an alternator having 2 or 4 poles.

This necessarily requires the coupling of the gas turbine with a reducer of the rev number in order to obtain an adaptation of the rotation rate of the shaft of the turbine so that this can be compatible with the number of revs required by the generator.

In the case of gas turbines having small or medium capacities, it is therefore necessary to have a rev number reducer suitably dimensioned for tolerating the mechanical power generated by the gas turbine.

The rev reducer consequently has large dimensions and also requires a lubricating system in proportion with it.

One of the disadvantages is therefore that in addition to being onerous in terms of cost and set up, the reducer also has a high encumbrance, thus increasing the overall dimension of the turbogenerator.

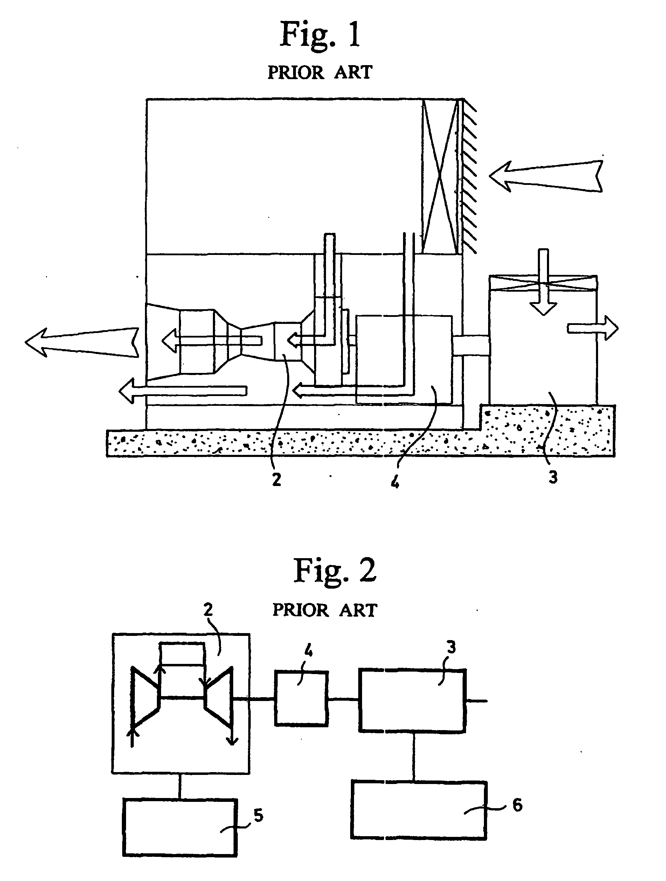

With reference to figure 1, this shows a turbogenerator according to the known art, wherein a turbine 2 is coupled with a current generator 3 by means of a rate reducer 4.

It can be noted, moreover, that the turbine 2 is situated on a supporting base, whereas the generator 3 is positioned on a foundation situated in the place in which the turbogenerator is positioned.

With reference to figure 2, an additional turbogenerator according to the known art can be observed, in which the turbine 2 is connected to a control and driving device 5 and, analogously the current generator 3 is also connected to a second control and driving device 6.

Furthermore, both the gas turbine 2 and the current generator 3 are equipped with a first supporting base and a second supporting base respectively.

The assembly is effected in the installation site, as also the alignment and centering of the shaft of the turbine 2 with the rev number reducer 4 and outlet shaft of the reducer 4 with the shaft of the generator or alternator 3.

Another drawback of current turbogenerators for the generation of electric power is that their assembly, effected in loco in a certain plant, is often difficult and also requires a long time for accurately aligning the turbine and generator to avoid problems during the functioning of the turbogenerator itself.

One of the disadvantages of the known turbogenerators therefore is that they have high installation costs and times.

A further disadvantage of current turbogenerators is that during its functioning, vibrations are caused which, over a certain period of time, can damage the foundation on which the generator is positioned.

Another drawback is that breakages, settling and subsiding of the rigid foundation made of a cementitious material at the base of the generator, are consequently generated with time, with a consequent nonalignment of the axis of the reducer with respect to the axis of the generator.

This causes a loss in the efficiency of the turbogenerator and a precocious aging of the components also accompanied by a reduction in the useful life of the components and turbogenerator itself.

The present invention seeks to provide a turbogenerator which has a reduced number of components to increase its reliability and availability.

The present invention also seeks to provide a turbogenerator which has extremely reduced times and set-up costs.

The present invention further seeks to provide a turbogenerator which has a reduced weight and encumbrance.

The present invention further seeks to provide a turbogenerator which has a high efficiency and is reliable with time.

The present invention further seeks to provide a turbogenerator which is compact and can be easily transported.

The present invention further seeks to provide a turbogenerator which avoids nonalignments between the shaft of the turbine and the shaft of the current generator.

The present invention further seeks to be able to provide a turbogenerator which reduces the installation and maintenance costs of the turbogenerator itself.

The present invention further seeks to provide a turbogenerator which has a simplified structure.

The present invention further seeks to provide a turbogenerator which is simple and economical.

According to the invention, there is provided a turbogenerator comprising a turbine, an electric generator directly connected to said turbine, a static frequency converter connected to said electric generator and associated with an electric system, characterized in that it comprises a single control and driving device for said turbine and for said electric generator.

The control and driving device may comprise a single display unit and a single central control and driving unit for said turbine and for said current generator.

Alternatively, the control and driving device may comprises a display unit and a central control and driving unit which receives signals from said turbine and from said current generator to control their functioning and to drive the functioning parameters, by means of control signals.

The gas turbine may be integrated with said current generator and may also be integrated with the frequency converter.

The invention will now be described in greater detail, by way of example, with reference to the drawings, in which:-
Figure 1 is a raised side view of a turbogenerator according to the known art;
Figure 2 is a schematic view of a turbogenerator according to the known art;
Figure 3 is a schematic view of a first preferred embodiment of a turbogenerator according to the present invention;
Figure 4 is a raised schematic view of a second preferred embodiment of a turbogenerator;
Figure 5 is a raised view of a third preferred embodiment of a turbogenerator;
Figure 6 is a raised view of a fourth preferred embodiment of a turbogenerator;
Figure 7 is a raised view of a fifth preferred embodiment of a turbogenerator;
Figure 8 is a raised view of a sixth preferred embodiment of a turbogenerator;
Figure 9 is a raised view of a seventh preferred embodiment of a turbogenerator.

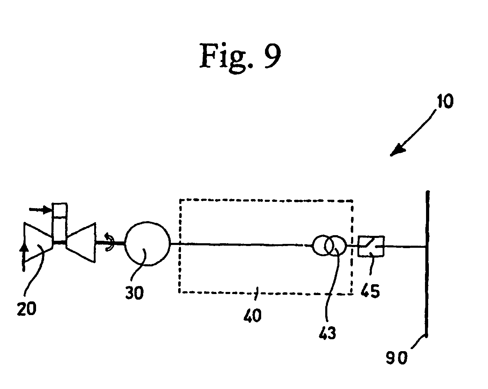

With reference to figure 9, this shows a turbogenerator 10 comprising a turbine 20, an electric generator 30 directly connected to said turbine 20, a static frequency converter 40 connected to said electric generator 30 and associated with an electric system 90.

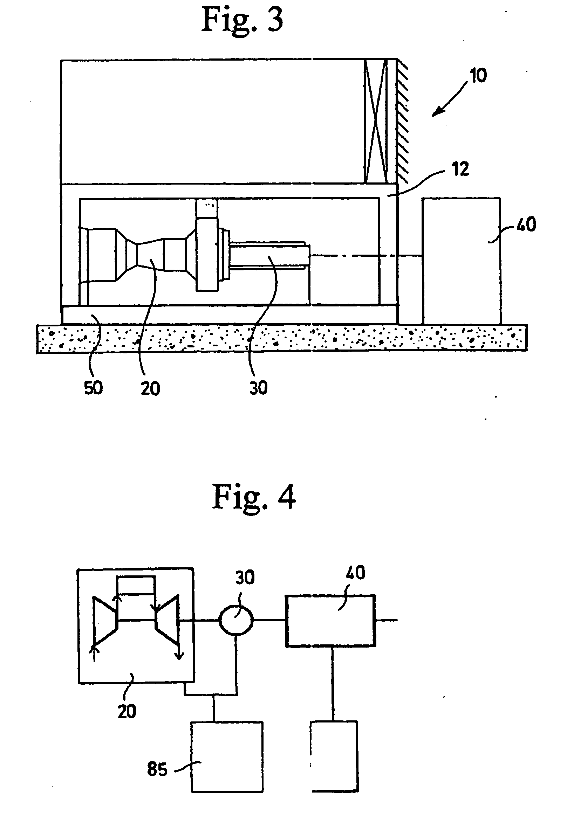

According to a preferred embodiment a turbogenerator 10 is provided, which comprises a single integrated control and driving device 85 for said turbine 20 and said current generator 30, schematically shown in figure 4.

Said control and driving device 85 comprises a control board and a central control and driving unit which receives signals from said turbine 20 and from said current generator 30 to control their functioning and to drive their functioning parameters, by means of control signals.

Said control board visualizes the functioning parameters of the turbine 20 and current generator 30 received from the central control and driving unit and is also capable of receiving inlet control signals by means of a user interface.

Said control signals are transmitted to the central control and driving unit which modifies the functioning parameters of the turbine 20 and current generator 30.

In this way, it is possible to have a single display unit and a single central control and driving unit for said turbine 20 and for said current generator 30.

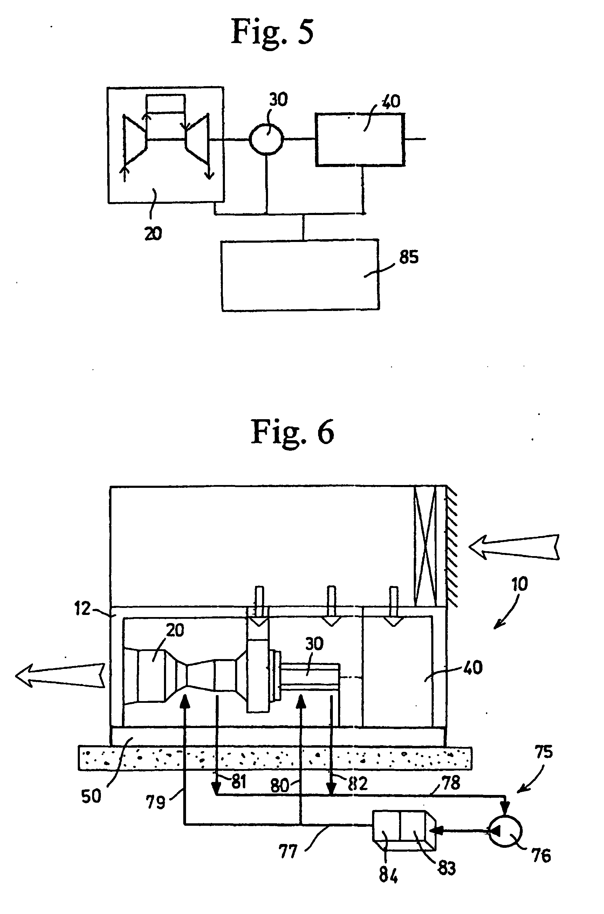

According to another embodiment, with reference to figure 5, the control and driving device 85 is single for said turbine 20, for said current generator 30 and for said frequency converter 40, i.e. the respective control and driving boards are integrated in a single control and driving device, and possibly with a separate user interface for said frequency converter 40.

The structure of the control and driving device is consequently advantageously simplified, reducing the number of components and their wiring, and also reducing the encumbrance of the turbogenerator itself.

With reference to figure 3, according to a further preferred embodiment, said turbine 20 and said electric generator 30 are constrained to a single supporting base 50, preferably metallic.

In this way, drawbacks are avoided, due to rigid foundations made of cementitious material, thus obtaining a higher reliability of the turbogenerator with time.

In other words, the supporting bases of said turbine 20 and said electric generator 30 are integrated in a single metallic supporting base 50.

It is therefore also possible to effect the centering and alignment of said turbine 20 and said electric generator 30 directly in the manufacturing phase, obtaining a preassembled turbogenerator 10.

Said frequency converter 40 is also preferably constrained to said supporting base 50.

The moving and installation operations of the turbogenerator 10 are therefore advantageously greatly simplified.

Said turbogenerator 10 preferably comprises a single soundproofing casing 12 for said turbine 20, for said current generator 30 and preferably for said frequency converter 40.

In other words, instead of having separate soundproofing casings for each component, said turbogenerator 10 has a single soundproofing casing 12 in which said turbine 20, said generator 30 are inserted.

Said soundproofing casing 12 is preferably coupled with said supporting base 50 and has the function of lowering the sound generated by the components of the turbogenerator itself 10.

Said frequency converter 40 preferably comprises at least one voltage and current transformer 43.

Said turbogenerator 10 preferably comprises a high voltage circuital switch 45 which is connected between said frequency converter 40 and said electric system 90.

The rotating windings of said generator 30 are preferably assembled on a rotating shaft of said turbine 20 or coupled therewith by means of a rigid or flexible coupling.

With a turbogenerator according to the present invention, the encumbrance and weight of the whole turbogenerator is therefore advantageously greatly reduced and an increase of 1% of the efficiency of the turbogenerator itself is also obtained.

As it is more compact, the turbogenerator is advantageously easier to transport.

Said turbogenerator 10 is preferably constrained to a means of transport, not shown in the figures, to obtain a mobile turbogenerator 10.

The turbogenerator 10 is therefore capable of converting the mechanical energy generated by the turbine 20 into electric power at the frequency of the electric system.

The generator 30 and the rotor of the turbine 20 are preferably coupled by means of a hard or flexible coupling.

The turbogenerator 10 preferably comprises an insulating element, not shown, capable of absorbing the vibrations, inserted between said frequency converter 40 and said supporting base 50.

Alternatively another kind of anti-vibrating suspension device capable of absorbing vibrations can be inserted between said frequency converter 40 and said base 50.

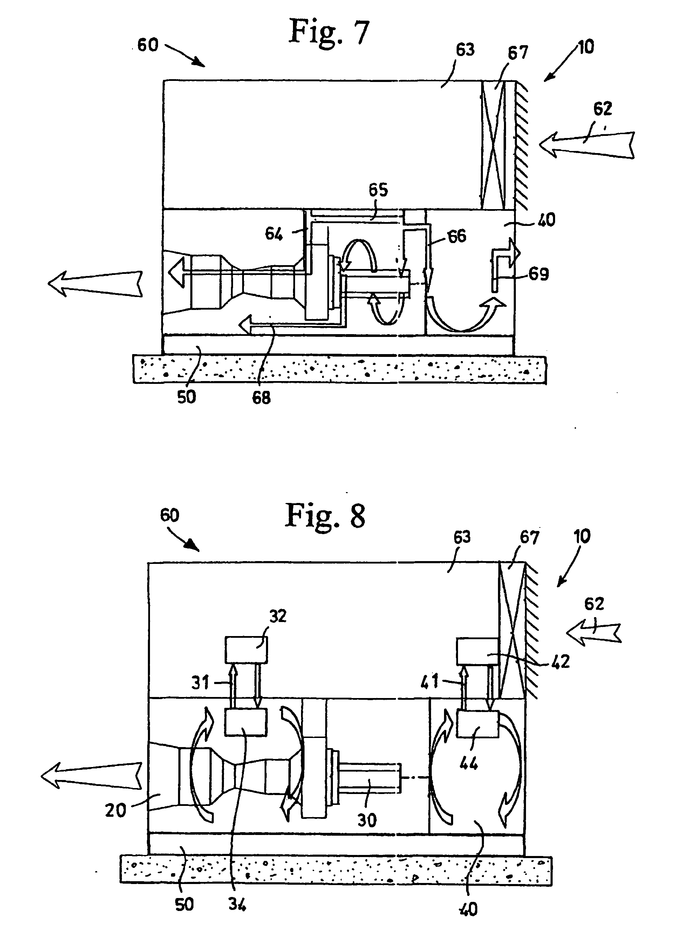

With reference to figure 7, according to a further preferred embodiment, said turbogenerator 10 preferably comprises an integrated single cooling device 60 for said turbine 20 and for said current generator 30 and preferably also for said frequency converter 40.

Said cooling device 60 is preferably an air cooling device.

Said cooling device 60 comprises a suction duct 62 connected to a chamber 63.

Said cooling device 60 also comprises a first air feeding duct 64 which connects said chamber 63 to said turbine 20 to provide feeding air for a burner and for the cooling of the hottest points of the turbine 20 itself.

Said cooling device 60 also comprises a second air feeding duct 65 which preferably connects said chamber 63 to said current generator 30 or preferably connects said first air feeding duct 64 to said current generator 30.

Said cooling device 60 preferably comprises a suction filter 67 for the air sucked thereby, preferably housed in said suction duct 62 in order to filter the air to feed the components of said turbogenerator 10.

Said cooling device 60 preferably comprises a third feeding duct 66 which preferably connects said chamber 63 to said frequency converter 40.

According to a preferred alternative embodiment, said third duct 66 connects said second duct 65 to said frequency converter 40.

In this way, it is possible to use a single chamber 63 instead of two or three chambers respectively for the current generator 30, for the frequency converter 40 and for the turbine 20.

The fact that there is only one suction duct 62 and also only one filter 67 for the air, considerably reduces the number of components of the turbogenerator 10.

The maintenance operations of said turbogenerator 10 are also advantageously reduced and facilitated.

The generator 30 and the turbine 20, and preferably also the frequency converter 40, share the cooling device 60, and in particular share the same air suction duct 62, the same filter 67 and the same chamber 63.

The exhausted air is then evacuated separately from the generator 30 respectively by means of a first evacuation duct 68, whereas for the turbine, the air is evacuated by the discharge duct with which it is equipped.

The air is preferably evacuated from the frequency converter 40 respectively by means of a second evacuation duct 69.

According to another aspect of the present invention, a turbogenerator 10 is provided equipped with a water cooling device 60.

In other words, the turbine 20 and the generator 30 are cooled with water.

The frequency converter 40 is also preferably cooled with water.

Said cooling device 60 preferably comprises at least a first gas/liquid heat exchanger 32 and at least a second liquid/gas heat exchanger 34 for the cooling of said turbine 20 and/or said current generator 30.

Said at least first gas/liquid heat exchanger 32 and said at least second gas/liquid heat exchanger 34 also cool said frequency converter 40.

Said at least first gas/liquid heat exchanger 32 allows the exchange of heat between the air of the chamber 63 and a liquid contained in a first cooling circuit 31.

In particular, said at least first gas/liquid heat exchanger 32 allows the exchange of heat between the air of said first feeding duct 64 and a liquid of said second cooling circuit 41.

Said at least second liquid/gas heat exchanger 34 allows the exchange of heat between said liquid contained in said first cooling circuit 31 and the air close to said turbine 20 and/or of said current generator 30 and/or preferably of said frequency converter 40.

According to another embodiment, said cooling device 60 preferably comprises a third gas/liquid heat exchanger 42 and a fourth liquid/gas heat exchanger 44 for said frequency converter 40.

The third gas/liquid heat exchanger 42 allows heat exchange between the air of the chamber 63 and a liquid contained in a second cooling circuit 41.

In particular, the third gas/liquid heat exchanger 42 allows heat exchange between the air of said second feeding duct 65 and a liquid contained in said second cooling circuit 41.

Analogously, said fourth liquid/gas heat exchanger 44 allows heat exchange between said liquid contained in said second cooling circuit 41 and the air close to said frequency converter 40.

Said cooling device 60 preferably comprises at least one ventilator for said suction duct 62.

Said cooling device 60 preferably comprises at least one pump for circulating said liquid in said first cooling circuit 31 and/or said second liquid cooling circuit 41.

With reference to figure 6, according to a further preferred embodiment, said turbogenerator 10 preferably comprises an integrated lubricating device 75 for said turbine 20 and for said current generator 30.

Said lubricating device 75 comprises a pump 76 for pumping oil into an outgoing duct 77 connected thereto, a return duct 78 for collecting the oil returning from said turbine 20 and from said current generator 30 also connected to the pump 76.

Said lubricating device 75 also comprises a first and a second oil feeding duct 79 and 80.

Said first duct 79 is connected at a first end to said outgoing duct 77 and at a second end it is connected to said turbine 20 to lubricate it with lubricating oil.

Said second duct 80 is connected at a first end to said outgoing duct 77 and at a second end it is connected to said current generator 30.

Said lubricating device 75 finally comprises a third and fourth return or collection duct of the oil, respectively indicated with 81 and 82 for collecting the returning oil and sending it towards the pump 76.

Said third duct 81 is connected at a first end to said turbine 20 and at a second end it is connected to said return duct, in turn connected to said oil pump 76.

Said fourth duct 82 is connected at a first end to said current generator 30 and at a second end it is connected to said return duct 78.

The turbine 20 and the electricity generator 30 share the same lubrication device 75, advantageously reducing the necessity of oil for their lubrication and consequently simplifying the turbogenerator 10.

The maintenance operations of said turbogenerator 10 are also advantageously reduced and facilitated.

The number of pumps necessary for the correct functioning of the turbogenerator is advantageously reduced to the minimum by means of a turbogenerator of a lubricating device according to the present invention.

The maintenance costs and also the quantity of lubricant necessary are also advantageously reduced.

According to a preferred embodiment, said turbine 20 is integrated with said current generator 30.

According to a further preferred embodiment, said turbine 20 is integrated with said current generator 30 and with said frequency converter 40.

This advantageously leads to a further reduction in the weight and encumbrance of the turbogenerator.

It can thus be seen that a turbogenerator according to the present invention achieves the objectives indicated above.

The turbogenerator of the present invention thus conceived can undergo numerous modifications and variants, all included in the same inventive concept defined in the claims.

Furthermore, in practice, the materials used, as also the dimensions and components, can vary according to technical demands.

## Claims

1. A turbogenerator (10) comprising a turbine (20), an electric generator (30) directly connected to said turbine (20), and a static frequency converter (40) connected to said electric generator (30) and associated with an electric system (90), **characterized in that** it comprises a single control and driving device (85) for said turbine (20) and for said electric generator (30).

2. The turbogenerator (10) according to claim 1, wherein a single control and driving device (85) is provided for said turbine (20), for said electric generator (30) and for said frequency converter (40).

3. The turbogenerator (10) according to claim 1 or claim 2, **characterized in that** said control and driving device (85) comprises a single display unit and a single central control and driving unit for said turbine (20) and for said current generator (30).

4. The turbogenerator (10) according to any preceding claim, **characterized in that** said control and driving device (85) comprises a display unit and a central control and driving unit which receives signals from said turbine (20) and from said current generator (30) to control their functioning and to drive the functioning parameters, by means of control signals.

5. The turbogenerator (10) according to any preceding claim, **characterized in that** said gas turbine (20) is integrated with said current generator (30).

6. The turbogenerator (10) according to any preceding claim, **characterized in that** said gas turbine (20) is integrated with said current generator (30) and with said frequency converter (40).

7. The turbogenerator (10) according to any preceding claim, wherein said turbine (20) and said electric generator (30) are constrained to a single supporting base (50).

8. The turbogenerator (10) according to claim 7, wherein said frequency converter (40) is also constrained to said supporting base.

## Patentansprüche

1. Turbogenerator (10) mit einer Turbine (20), einem direkt mit der Turbine (20) verbundenen elektrischen Generator (30) und einem statischen Frequenzumrichter (40), der mit dem elektrischen Generator (30) verbunden und einem elektrischen System (90) zugeordnet ist, **dadurch gekennzeichnet, dass** er nur eine Steuerungs- und Antriebsvorrichtung (85) für die Turbine (20) und für den elektrischen Generator (30) aufweist.

2. Turbogenerator (10) nach Anspruch 1, wobei nur eine Steuerungs- und Antriebsvorrichtung (85) für die Turbine (20), für den elektrischen Generator (30) und für den Frequenzumrichter (40) vorgesehen ist.

3. Turbogenerator (10) nach Anspruch 1 oder Anspruch 2, **dadurch gekennzeichnet, dass** die Steuerungs- und Antriebsvorrichtung (85) nur eine Anzeigeeinheit und nur eine zentrale Steuerungs- und Antriebseinheit für die Turbine (20) und für den Stromgenerator (30) aufweist.

4. Turbogenerator (10) nach einem der vorstehenden Ansprüche, **dadurch gekennzeichnet, dass** die Steuerungs- und Antriebsvorrichtung (85) eine Anzeigeeinheit und eine zentrale Steuerungs- und Antriebseinheit aufweist, welche Signale von der Turbine (20) und von dem Stromgenerator (30) empfängt, um deren Funktion zu steuern und um die Funktionsparameter mittels Steuersignalen zu bestimmen.

5. Turbogenerator (10) nach einem der vorstehenden Ansprüche, **dadurch gekennzeichnet, dass** die Gasturbine (20) mit dem Stromgenerator (30) zusammengefasst ist.

6. Turbogenerator (10) nach einem der vorstehenden Ansprüche, **dadurch gekennzeichnet, dass** die Gasturbine (20) mit dem Stromgenerator (30) und dem Frequenzumrichter (40) zusammengefasst ist.

7. Turbogenerator (10) nach einem der vorstehenden Ansprüche, wobei die Turbine (20) und der elektrische Generator (30) auf nur ein tragendes Fundament (50) beschränkt sind.

8. Turbogenerator (10) nach einem der vorstehenden Ansprüche, wobei der Frequenzumrichter (40) auch auf das tragende Fundament beschränkt ist.

## Revendications

1. Turbo-alternateur (10) comportant une turbine (20), un alternateur (30) directement connecté à ladite turbine (20), et un convertisseur statique de fréquence (40) connecté audit alternateur (30) et associé à un système électrique (90), **caractérisé en ce qu'**il comporte un unique dispositif de commande et d'entraînement (85) pour ladite turbine (20) et pour ledit alternateur (30).

2. Turbo-alternateur (10) selon la revendication 1, dans lequel un unique dispositif de commande et d'entraînement (85) est prévu pour ladite turbine (20), pour ledit alternateur (30) et pour ledit convertisseur de fréquence (40).

3. Turbo-alternateur (10) selon la revendication 1 ou la revendication 2, **caractérisé en ce que** ledit dispositif de commande et d'entraînement (85) comprend un unique afficheur et une unique unité centrale de commande et d'entraînement pour ladite turbine (20) et pour ledit alternateur (30).

4. Turbo-alternateur (10) selon l'une quelconque des revendications précédentes, caractérisé en que ledit dispositif de commande et d'entraînement (85) comprend un afficheur et une unité centrale de commande et d'entraînement qui reçoit des signaux de ladite turbine (20) et dudit alternateur (30) pour, à l'aide de signaux de commande, commander le fonctionnement et activer les paramètres de fonctionnement.

5. Turbo-alternateur (10) selon l'une quelconque des revendications précédentes, **caractérisé en ce que** ladite turbine à gaz (20) est intégrée avec ledit alternateur (30).

6. Turbo-alternateur (10) selon l'une quelconque des revendications précédentes, **caractérisé en ce que** ladite turbine à gaz (20) est intégrée avec ledit alternateur (30) et avec ledit convertisseur de fréquence (40).

7. Turbo-alternateur (10) selon l'une quelconque des revendications précédentes, dans lequel ladite turbine (20) et ledit alternateur (30) sont fixés sur une seule embase de support (50).

8. Turbo-alternateur (10) selon la revendication 7, dans lequel ledit convertisseur de fréquence (40) est lui aussi fixé sur ladite embase de support.
